# EUROPEAN PATENT APPLICATION

(11) **EP 4 803 583 A1**
(43) Date of publication of application: **09.09.2026**
(21) Application number: 25161320.4
(22) Date of filing: 03.03.2025
(51) Int. Cl.: C09D 5/00, C09D 7/61, C09D 7/62, C09D 163/00, H01B 3/56, H01B 3/40

(54) **COATING MATERIAL FOR COATING A SURFACE OF AN APPARATUS FOR THE GENERATION, THE DISTRIBUTION AND/OR THE USAGE OF ELECTRICAL ENERGY**

(71) Applicant: Hitachi Energy Ltd, 8050 Zürich (CH)
(72) Inventor: STRAUMANN, Ulrich, 8404 Winterthur (CH); HOLST, Isabell, 8045 Zürich (CH); GATZSCHE, Michael, 8162 Steinmaur (CH); KELLER, Markus M., 8406 Winterthur (CH); BOEHM, Moritz, 5507 Mellingen (CH)
(74) Representative: Schaad, Balass, Menzl & Partner AG

(57) **Abstract**

The present invention relates to a coating material for coating a surface of an apparatus for the generation, the distribution and/or the usage of electrical energy, or a component of such an apparatus, the coating material being a curable resin composition comprising an epoxy resin and a curing agent and having a water content of less than 0.1 wt.-%, the proportion of non-volatile compounds being higher than 70 wt.-% based on the total weight of the composition.

According to the invention, the coating material contains at least one conductivity pigment in an amount such that the electrical conductivity of the coating material after curing is from 10⁻⁹ to 10⁻⁶ S/m.

## Description

The present invention relates to a coating material for coating a surface of an apparatus for the generation, the distribution and/or the usage of electrical energy. It further relates to an apparatus as referred to above, or a component of such an apparatus.

In an apparatus of the aforementioned type, such as in a medium or high voltage switchgear or a component thereof, an electrically conductive part is frequently arranged in a gas-tight housing, which defines an insulating space. Typically, the insulation space comprises an insulation gas and separates the housing from the electrically conductive part, effectively preventing electrical current from passing through the insulation space.

In the past, SF₆ was commonly used as insulation gas owed to its exceptionally good dielectric properties. However, SF₆ has a relatively high Global Warming Potential (GWP), and efforts are thus being made to limit its use.

In recent years, organofluorine compounds, in particular fluoroketones, fluoronitriles have been suggested as an environment-friendly alternative to SF₆.

Although organofluorine compounds can demonstrate excellent dielectric properties and are beneficial in terms of environmental compatibility, challenges frequently arise due to their higher reactivity in comparison to SF₆.

On the one hand, increased reactivity of the organofluorine compounds leads to the unfavorable situation that the main dielectric compound of the insulation gas is degraded and thus removed from the system. Replacement of the degraded portion of the organofluorine compounds often requires operation of the apparatus to be interrupted, leading to a shortening of the maintenance intervals.

On the other hand, the degradation products formed often have undesirable properties and the potential to damage parts of the apparatus. This may be a serious issue if e.g. hydrofluoric acid (HF) is formed as a reaction product of organofluorine compounds with water (which is inevitably present as residual moisture in the apparatus), since HF is extremely toxic and corrosive.

In light of this, efforts have been made in the past to minimize potential reactions between the insulation gas compounds and the solid components of the apparatus.

WO2015052100A1, for example, relates to an apparatus in which an organofluorine compound is utilized as an insulation gas, and teaches that at least some of the components of the apparatus that are directly exposed to the insulation gas are made of a material which remains unaltered during exposure to the insulation gas for a period of more than 1 year at operational conditions.

Even in devices operated with SF₆, there has in the past often been an issue with reduced breakdown voltage and reliability due to surface irregularities during operation. To address these irregularities, the affected surfaces have been coated with an insulating material to enhance dielectric strength, as e.g. discussed in Ch. Lederle et al., "The Influence of surface roughness on the Impulse Breakdown Voltage of SF6", USA, Boulder, CEIDP, pp 522-525, 2004.

US2019156968A1 discloses a hybrid insulation system based on a gaseous medium comprising heptafluoroisobutyronitrile for electrical insulation and/or for electric arc extinction in medium- or high-voltage equipment, in combination with a solid insulation of low dielectric permittivity. Specifically, the solid dielectric layer is according to this document made of a material comprising a polyepoxide resin optionally containing a filler, a polyurethane resin optionally containing a filler, or aluminum oxide.

Although layers or coatings as taught in US2019156968A1 may lead to a homogenized electric field and reduce the criticality of free particles on inner surfaces of the apparatus (such as electrode surfaces and enclosure surfaces), they often lead to excessive charge accumulation, which *i.a.* can result in dielectric breakdown, thereby compromising the insulating properties of the coating.

In consideration of these shortcomings of the prior art, the problem to be solved by the present invention is to provide a coating for an electrical apparatus, which at the one hand ensures that the degradation of the dielectric insulation gas, to which it is exposed, is minimized, and which also mitigates the risk of dielectric breakdown during operation of the apparatus. In particular, functionality of the coating, more particularly its insulation properties, shall be maintained over relatively long service times of the apparatus.

The problem is solved by the subject matter of the independent claims. Preferred embodiments of the invention are defined in the dependent claims.

Thus, the invention relates to a coating material, which is designed to be applied on a surface of an apparatus for the generation, the distribution and/or the usage of electrical energy, or a component of such an apparatus. The feature that the coating material of the invention is "for coating a surface" of the apparatus covers embodiments, in which the whole surface is coated or only portions thereof.

According to claim 1, the coating material of the invention is a curable resin composition comprising an epoxy resin and a curing agent. It has a water content of less than 0.1 wt.-%, and preferably is water-free. Owed to utilizing an epoxy resin system, the coating material has a low reactivity towards the insulation gas, irrespective of whether SF₆ or any of the more reactive organofluorine compounds are used.

Claim 1 further requires that the proportion of non-volatile compounds is higher than 70 wt.-% based on the total weight of the composition. The term "non-volatile compounds" as used in this context relates to compounds other than volatile organic compounds, which are defined as organic compounds having at 293.15 K a vapour pressure of 0.01 kPa or more, or having a corresponding volatility under the particular conditions of use. Thus, despite of using a solvent-based resin composition (as opposed to the conventional water-based formulation) the amount of volatile compounds that may "outgas" from the coating material and potentially contaminate the insulation space is maintained at a very low level. This ensures that also the "indirect route", through which possible reactions of outgassing compounds with the insulating gas could occur, is blocked as well.

According to claim 1, the coating material of the present invention is characterized in that it contains at least one conductivity pigment in an amount such that the electrical conductivity of the coating material after curing is in a range of from 10⁻⁹ to 10⁻⁶ S/m. Specifically, this range relates to the electrical conductivity of the coating material if exposed to a temperature of from 30° to 105°C and to an insulation gas having a frost point of -10°C or lower. Alternatively, the range can relate to the electrical conductivity of the coating material if exposed to a constant relative humidity of RH ≤ 10% for a temperature ranging from 105°C to 20°C and RH ≤ 25% for < 10°C.

By setting the electrical conductivity in the range as claimed, the coating material allows a coating to be formed, which on the one hand avoids field enhancements that could potentially occur on rough surfaces. Thus, the formation of localized increases in the electric field strength is reduced, and the risk of electric field strength exceeding the dielectric strength of the insulation material, and hence of dielectric breakdown, can be mitigated. On the other hand, by setting a lower limit of the electrical conductivity as claimed, charge accumulations can be avoided, which also results in a reduced risk of dielectric breakdown.

In summary, the present invention effectively minimizes the formation of decomposition products that could potentially harm the apparatus or its components. Additionally, it preserves the dielectric insulation capabilities of the insulation medium over extended periods. By establishing the electrical conductivity within a defined range (which differs from that of conventional coating materials), the present invention allows to reduce the risk of dielectric breakdown. Ultimately, by balancing insulation properties - achieved through the selection of an epoxy resin system - and electrical conductivity as specified in claim 1, a high dielectric strength of 5 kV or greater can be attained.

The electrical conductivity as defined above can be achieved by admixing to the epoxy resin (which intrinsically has a very low conductivity) a defined amount of conductivity pigments, as mentioned above. The term "conductivity pigment" as used in the context of the present invention relates to any electrically conductive pigment allowing electricity to be passed through or dissipated in the coating. In a straightforward and particularly preferred embodiment, the coating material comprises from 5 to 10 wt.-% of the at least one conductivity pigment based on the total weight of the coating material composition. In this regard, it is further preferred that the at least one conductivity pigment is selected from the group of carbon black, metal pigments and mica pigments, in particular Sb-doped SnO₂-coated mica pigments. The choice of the respective conductivity pigment(s) out of this group depends on the specific application. If, for example, a light-colored coating is desired, the coating material preferably comprises Sb-doped SnO₂-coated mica pigments in the range defined above.

The material's electrical conductivity as well as its dielectric withstand can e.g. be determined by a method, in which the coating material to be investigated is applied in a defined thickness on an aluminum plate, followed by pre-conditioning of the respective samples (according to the application conditions). After pre-conditioning, a conductive silver varnish is applied to the samples. The electrical conductivity of the coating can then be measured using an electrode arrangement according to IEC 62631-3-1, whereas dielectric withstand is measured according to IEC 60243-1.

In order to reduce the risk of localized increases in the electric field strength most efficiently, the electrical conductivity of the coating material after curing is preferably set to 10⁻⁷ S/m at most. Again, this upper limit of the electrical conductivity relates in particular to the material being exposed to a temperature of from 30° to 105°C and to an insulation gas having a frost point of -10°C or lower.

According to a further preferred embodiment, the epoxy resin is a bisphenol-based epoxy resin, in particular a bisphenol A-based epoxy resin, which has a low intrinsic reactivity and conductivity, and which therefore constitutes a suitable system for tailoring the desired conductivity (by adding conductivity pigments).

To further ensure that the reaction rate of the coating material with the insulation medium remains minimal, the resin composition preferably contains less than 5 wt.%, preferably less than 2 wt.%, more preferably less than 0.5 wt.%, of compounds containing a functional hydroxyl group and/or of hygroscopic compounds, in particular amide compounds. Therefore, a coating material is provided that is additionally free from compounds containing nucleophilic groups, which could react with constituents of the insulation medium, and/or from compounds that have the potential to attract water. In this regard, it is particularly preferred that the resin composition is essentially free of water, of compounds containing a functional hydroxyl group or of hygroscopic compounds, in particular amide compounds.

During the course of the invention, it has been discovered that the advantageous properties of the coating material, particularly in terms of low reactivity, can be achieved by using an amine compound as curing agent in the resin composition. With respect to this preferred embodiment, it is particularly preferred that the amine compound of the resin composition is a polyamine or an epoxy-amine adduct.

According to a further preferred embodiment, the resin composition comprises at least one filler, in particular selected from the group consisting of BaSO₄, TiO₂, silicates, and mixtures thereof. As a result, the performance and properties of the coating material can be further improved and tailored to meet the specific requirements of its intended application. For example, in this embodiment, the thermal stability and barrier properties against moisture and chemicals can be improved, thereby enhancing the durability and lifespan of the coating material. Additionally, the whiteness and opacity can be enhanced, which improves the aesthetic qualities of the coating. In this context, TiO₂ is preferably used as a filler.

Curing the curable resin composition can in particular be induced by heating (in which case the resin composition is referred to as being heat-curable). As mentioned above, an amine compound is preferably used as curing agent (or hardener), owed to the low reactivity of the cured coating material.

In a preferred embodiment, the coating material is in the form of a paint to be applied on a surface directly exposed to the insulation medium used in the apparatus. The paint can be applied in a simple manner during the manufacturing process and the thickness of the coating can be readily controlled.

Apart from the coating material referred to above, the present invention relates, according to a further aspect, to an apparatus comprising a coating made of the coating material.

Specifically, the invention relates to an apparatus for the generation, the distribution and/or the usage of electrical energy, or a component of such an apparatus, said apparatus comprising a housing enclosing an insulating space, which contains a dielectric insulation medium comprising an organofluorine compound. The apparatus or component comprises an insulation medium interface directly exposed to the insulation medium in the assembled state, wherein the insulation medium interface is at least partially formed by a coating made of the coating material.

Specifically, the term "component" as used in the context of the present invention relates to any electrical or electronic component that can be passive or active, and that is completely or only partially contained in the insulating space.

The component comprises a component body and the coating, which covers at least a portion of the component body and forms the insulation medium interface directly exposed to the insulation medium. The portion of the component body that is covered by the coating is also referred to as the substrate on which the coating is applied.

According to the invention, the coating material comprises a curable resin composition containing an epoxy resin and a curing agent, preferably in the form of an amine compound. Hence, the final coating obtained after curing is an epoxy-based coating.

A very pronounced effect is achieved if the coating is applied on a surface of the apparatus, which is composed of a metal selected from the group consisting of aluminum, copper and silver. A surface composed of any of these metals is particularly susceptible to reduced breakdown voltage and reliability as a result of surface irregularities.

As discussed above, the presence of the epoxy-based coating provides a barrier between the dielectric insulation medium and the portion of the component, which without the coating would be directly exposed to the insulation medium. Thus, the epoxy-based coating prevents the insulation medium from reacting with the material of the respective part or component of the apparatus and/or prevents substances from diffusing out of (or outgassing from) the material of the part or component into the insulating space. Hence, the integrity of both the coated part or component of the apparatus and the insulation medium can be maintained over a relatively long period of time, despite the relatively high reactivity of the organofluorine compound used.

In a preferred embodiment, the coating thickness is at least 40 µm, as this range has been shown to provide an effective barrier effect. More preferably, the thickness of the coating is at least 60 µm, more preferably at least 60 µm and less than 200 µm. This thickness range is particularly well-suited for medium and high-voltage applications. Thicker coatings of more than 200 µm may be challenging to apply using standard methods. An even more desirable thickness range is between 60 µm and 90 µm, as this range strikes an optimal balance between providing effective dielectric insulation and facilitating straightforward production processes. By offering the aforementioned barrier effect, the coating effectively prevents the insulation medium from interacting with the apparatus components and inhibits the diffusion of substances present on or near the surface of these components into the insulating space.

To further ensure that the moisture content in the insulation space remains minimal, the water content in the curable resin composition is less than 0.1 wt.-%, as previously discussed above regarding the coating material of the invention.

In addition, the proportion of (non-volatile) compounds is higher than 70 wt.-% based on the total weight of the composition, as also discussed above. Thus, the amount of volatile compounds is kept low, ensuring that outgassing of such compounds, in particular of volatile organic compounds, into the insulation space can be reduced. As a result, not only the functionality of the component remains unaffected, but also a potential reaction of the volatile organic compound with other (gaseous) compounds of the insulation medium is prevented.

The term "insulation medium" as used in the context of the present invention relates to an insulation fluid. Since at least a portion of the insulation medium is in the form of an insulation gas, the insulation medium can be entirely in gaseous form or can be a two-phase system comprising a portion in gaseous form and a portion in liquid form.

According to a preferred embodiment, the organofluorine compound comprised in the dielectric insulation medium is selected from the group consisting of fluoroethers, in particular hydrofluoromonoethers, fluoroketones, in particular perfluoroketones, fluoroolefins, in particular hydrofluoroolefins, and fluoronitriles, in particular perfluoronitriles, and mixtures thereof. These compounds have a relatively low Global Warming Potential (GWP) and an Ozone Depletion Potential of 0, and from an ecological point of view are therefore beneficial over SF₆.

In a particularly preferred embodiment, the organofluorine compound is heptafluoroisobutyronitrile. This compound is advantageous due to its relatively low boiling point, excellent dielectric properties, and low toxicity.

In a further preferred embodiment, the insulation medium comprises carbon dioxide (CO₂) as a carrier gas (or background gas) constituent. Additionally or alternatively, the insulation medium can comprise air or at least one air component, in particular selected from the group consisting of oxygen (O₂), nitrogen (N₂), carbon dioxide (CO₂), and mixtures thereof.

Furthermore, the insulation medium, particularly the insulation gas, may contain one or more degradation products of the organofluorine compound, although their presence is generally regarded as undesirable. This is in particular the case when the apparatus is a switching apparatus, where the insulation gas inevitably includes certain amounts of these degradation products.

The apparatus of the present invention can be a high voltage apparatus, a medium voltage apparatus, a low voltage apparatus, or a component thereof. Specifically, the term "medium voltage" is used in the conventionally accepted manner, i.e. the term "medium voltage" refers to a voltage that is greater than 1000 volts (V) for alternating current (AC) and greater than 1500 V for direct current (DC) but that does not exceed 52,000 V for AC, or 75,000 V for DC. The term "high voltage" is used in the conventionally accepted manner, i.e. the term "high voltage" refers to a voltage that is strictly greater than 52,000 volts for AC and greater than 75,000 V for DC.

Preferably, the apparatus or component is selected from the group of gas-insulated switchgears (GIS) or parts thereof, in particular a transmission or sub-transmission of a GIS or an integrated GIS, gas-insulated lines and interrupters

In certain embodiments, the apparatus may comprise at least one gas seal for sealing off the insulating space from a further space, with the gas seal being in direct contact with the coating.

In certain cases, a preferred embodiment may involve the component being a bushing, wherein the insulation medium interface includes at least a portion of the flange of the bushing on the side that is in contact with a gas seal designed to seal off the flange from the insulating space.

In a particularly preferred embodiment, the gas seal comprises a butyl rubber. Butyl rubber can be used as a sealing material to obtain gas seals that are highly compatible with organofluorine compounds. Additionally, butyl rubber is compatible with the epoxy-based coating, ensuring overall structural integrity. As a result, the sealing function can be maintained over an extended period, thereby minimizing maintenance efforts. Furthermore, butyl rubber exhibits very low permeability to potential carrier gas constituents of the insulation medium, such as CO₂, O₂, N₂, and air. This allows the apparatus to be operated at higher pressures, which may be required to achieve the required dielectric performance.

## Claims

1. Coating material for coating a surface of an apparatus for the generation, the distribution and/or the usage of electrical energy, or a component of such an apparatus, the coating material being a curable resin composition comprising an epoxy resin and a curing agent and having a water content of less than 0.1 wt.-%, the proportion of non-volatile compounds being higher than 70 wt.-% based on the total weight of the composition,
wherein the coating material contains at least one conductivity pigment in an amount such that the electrical conductivity of the coating material after curing is from 10⁻⁹ to 10⁻⁶ S/ₘ.

2. Coating material according to claim 1, wherein it comprises from 5 to 10 wt.-% of the at least one conductivity pigment based on the total weight of the coating material composition, the at least one conductivity pigment being preferably selected from the group of carbon black, metal pigments and mica pigments, in particular Sb-doped SnO₂-coated mica pigments.

3. Coating material according to any of the preceding claims, wherein the electrical conductivity of the coating material after curing is at most 10⁻⁷ S/m, in particular if exposed to a temperature of from 30° to 105°C and to an insulation gas having a frost point of -10°C or lower.

4. Coating material according to any of the preceding claims, wherein the epoxy resin is a bisphenol-based epoxy resin, in particular a bisphenol A-based epoxy resin.

5. Coating material according to any of the preceding claims, wherein the resin composition contains less than 5 wt.%, preferably less than 2 wt.%, more preferably less than 0.5 wt.%, of compounds containing a functional hydroxyl group and/or of hygroscopic compounds, in particular amide compounds.

6. Coating material according to any of the preceding claims, wherein the resin composition is essentially free of water, of compounds containing a functional hydroxyl group and of hygroscopic compounds, in particular amide compounds.

7. Coating material according to any of the preceding claims, wherein an amine compound is used as curing agent in the resin composition.

8. Coating material according to claim 7, wherein the amine compound of the resin composition is a polyamine or an epoxy-amine adduct.

9. Coating material according to any of the preceding claims, wherein the resin composition comprises at least one filler, in particular selected from the group consisting of BaSO₄, TiO₂, silicates, and mixtures thereof.

10. Apparatus for the generation, the distribution and/or the usage of electrical energy, or a component of such an apparatus, said apparatus comprising a housing enclosing an insulating space, said insulating space containing a dielectric insulation medium comprising an organofluorine compound, wherein the apparatus or component comprises an insulation medium interface directly exposed to the insulation medium in the assembled state, wherein the insulation medium interface is at least partially formed by a coating made of the coating material according to any of claims 1 to 9.

11. Apparatus or component according to any one of the preceding claims, **characterized in that** the coating is applied on a surface of the apparatus, which is composed of a metal selected from the group consisting of aluminum, copper and silver.

12. Apparatus or component according to any one of the preceding claims, **characterized in that** the thickness of the coating is at least 40 µm, preferably at least 60 µm, more preferably at least 60 µm and less than 200 µm, more preferably between 60 µm and 90 µm.

13. Apparatus or component according to any one of the preceding claims, **characterized in that** the organofluorine compound comprised in the dielectric insulation medium is selected from the group consisting of fluoroethers, in particular hydrofluoromonoethers, fluoroketones, in particular perfluoroketones, fluoroolefins, in particular hydrofluoroolefins, and fluoronitriles, in particular perfluoronitriles, and mixtures thereof.

14. Apparatus or component according to claim 13, **characterized in that** the organofluorine compound is heptafluoroisobutyronitrile.

15. Apparatus or component according to any one of the preceding claims, wherein the apparatus or component is selected from the group of gas-insulated switchgears or parts thereof, in particular a transmission or sub-transmission of a GIS or an integrated GIS, gas-insulated lines and interrupters.
